# EUROPEAN PATENT SPECIFICATION

(11) **EP 4 198 270 B1**
(45) Date of publication and mention of the grant of the patent: **28.01.2026**
(21) Application number: 21425070.6
(22) Date of filing: 20.12.2021
(51) Int. Cl.: F01D 25/08, F01D 25/12, F01D 25/30

(54) **EXHAUST GAS CASING FOR A HEAVY-DUTY GAS TURBINE ENGINE, HEAVY-DUTY GAS TURBINE ENGINE AND METHOD OF RETROFITTING A HEAVY-DUTY GAS TURBINE**
ABGASGEHÄUSE FÜR EINEN HOCHLEISTUNGSGASTURBINENMOTOR, HOCHLEISTUNGSGASTURBINENMOTOR UND VERFAHREN ZUM NACHRÜSTEN EINER HOCHLEISTUNGSGASTURBINE
CARTER DE GAZ D'ÉCHAPPEMENT POUR UN MOTEUR À TURBINE À GAZ À GRANDE PUISSANCE, MOTEUR À TURBINE À GAZ À GRANDE PUISSANCE ET PROCÉDÉ DE MODIFICATION D'UNE TURBINE À GAZ À GRANDE PUISSANCE

(43) Date of publication of application: 21.06.2023
(73) Proprietor: ANSALDO ENERGIA S.p.A., 16152 Genova (IT)
(72) Inventor: Traverso, Federica, 16152 GENOVA (IT); Bardetta, Caterina, 16152 GENOVA (IT); Cassinelli, Claudio, 16152 GENOVA (IT)
(74) Representative: Studio Torta S.p.A.

(56) References cited:
- US-A1- 2017 241 295
- US-B2- 10 094 285
- US-B2- 10 519 862

## Description

### TECHNICAL FIELD

The present invention relates to an exhaust gas casing for a heavy-duty gas turbine engine, to a heavy-duty gas turbine engine and to a method of retrofitting a heavy-duty gas turbine engine.

### BACKGROUND

As is known, high operative temperatures leads to deformation of components in gas turbine engines. While thermal expansion, that requires measures to avoid excess stress and loss of functionality (for example leaking seals), but normally causes reversible effects, long-term exposure to high temperature may result in permanent deformation.

This is a quite common problem and may affect several components, including exhaust gas casing. Specifically, an exhaust gas casing is arranged at the outlet of the turbine, where hot gas is expanded, and is connected to a diffuser by a downstream flange. The exhaust casing also houses aft rotor bearings. Although a substantial fraction of the internal energy of the hot gas has been extracted and converted in mechanical work in the turbine, temperature inside the exhaust gas casing is nevertheless high enough to cause irreversible effects by plastic deformation and creep. For example, plastic contribute is often the main factors leading to horizontal deformation of the flange. Both plastic deformation and creep may cause the housing of the rotor bearings to sag. This event is particularly dangerous because the clearance between blade tips and the turbine casing is kept as small as possible in operation to avoid leakage and improve efficiency. Thus, the blade tips may enter in contact with the turbine casing and be eroded or break.

US 10 094 285 B2 discloses an exhaust gas casing for a heavy-duty gas turbine engine, comprising a frustoconical shell delimiting a hot gas path and having a downstream flange for connection to a diffuser and an annular cooling structure, extending around a circumferential portion of the shell and configured to convey cooling air around the shell. The annular cooling structure is inwardly defined by the shell and is outwardly defined by at least an annular cover structure attached to the shell. The shell comprises a first half-shell and a second half-shell joined to each other at a split plane, and the annular cooling structure comprises a first cooling channel, extending around the first half-shell, and a second cooling channel, extending around the second half-shell. The annular cooling structure comprises a first carter, attached to the first half-shell and delimiting the first cooling channel, and a second carter, attached to the second half-shell and delimiting the second cooling channel.

Other examples of known exhaust gas casing are disclosed in US 2017/241495 A1 and in US 10 519 862 B2.

### SUMMARY OF THE INVENTION

It is an aim of the present invention to provide an exhaust gas casing for a heavy-duty gas turbine engine, a heavy-duty gas turbine engine and a method of retrofitting a heavy-duty gas turbine engine that allow the above limitations to be overcome or at least reduced.

According to the present invention there is provided an exhaust gas casing for a heavy-duty gas turbine engine, comprising:
a shell delimiting a hot gas path and having a downstream flange for connection to a diffuser;
an annular cooling structure, extending around at least a circumferential portion of the shell adjacent to the downstream flange and configured to convey cooling air around the shell;
wherein the annular cooling structure is inwardly defined by the shell and is outwardly defined by at least an annular cover structure attached to the shell;
wherein the shell comprises a first half-shell and a second half-shell joined to each other at a split plane, and wherein the annular cooling structure comprises a first cooling channel, extending around the first half-shell, and a second cooling channel, extending around the second half-shell;
wherein the annular cooling structure comprises a first carter, attached to the first half-shell and delimiting the first cooling channel, and a second carter, attached to the second half-shell and delimiting the second cooling channel;
and wherein the shell has frustoconical shape;
characterized in that the first carter and the second carter comprise respective cylindrical lateral, walls attached to a radially outer edge of the downstream flange of the shell, and respective annular front walls, extending radially inwards from the respective lateral walls and directly attached to the shell, whereby the first cooling channel and the second cooling channel have triangular cross section.

The annular cooling structure allows to mitigate effects of exposure to high temperature for the shell of the exhaust gas casing, especially in the vicinity of the downstream flange, which is normally a critical region. The annular cooling structure is inwardly defined by the shell itself. Therefore, cooling air supplied through the annular cooling structure flows directly in contact with the shell circumferentially along the shell itself, thus providing effective cooling action. In particular, the cover structure may also be optimized to provide the cooling effect in an efficient manner through the design of the annular cover structure. As a result, permanent deformation of the shell in the region of the downstream flange may be advantageously prevented.

The annular cooling structure is extremely simple and may be easily designed to minimize occupied space, without affecting the cooling action. Moreover, due to simple construction, the cooling annular structure may be easily installed in existing gas turbine engines by retrofitting and existing shells do not require extensive reworking.

Cooling channels provide for cooling of respective half-shells and do not alter substantially the general structure of the exhaust gas casing, especially at the split plane. Thus, once the first and second cooling channels have been applied to the respective half-shells, and no special measures need be taken e.g. to ensure that the exhaust system may be disassembled as required for inspection and maintenance activities.

Carters are extremely simple and inexpensive structures that can be readily designed and applied to new gas turbine engines as well as to existing machines. Flexible and effective solutions are thus made available.

In this manner, design of the cooling channels and of the overall cover structure is simple and compact and favors installation even in case available space is scarce.

According to an aspect of the invention, the first cooling channel and the second cooling channel have respective inlet connectors at respective first circumferential ends and respective outlet connectors at respective second circumferential ends.

Thus, cooling air is conveyed all along the length of the first cooling channel and of the second cooling channel and ensures optimal cooling action.

According to an aspect of the invention, the inlet connectors and the outlet connectors of the first cooling channel and of the second cooling channel are secured to the shell without bearing on the first carter and the second carter.

While the first carter and the second carter may be relatively weak, the shell ensures mechanical strength required to withstand stress caused by several factors, such as thermal expansion, pressure gradients, vibrations. The risk of structural damages because of the presence of the annular cooling structure is thus virtually cancelled.

According to an aspect of the invention, the first circumferential end of the first cooling channel is adjacent to the second circumferential end of the second cooling channel and the second circumferential end of the first cooling channel is adjacent to the first circumferential end of the second cooling channel.

The first cooling channel and the second cooling channel reach most of the circumferential extent of the shell near the downstream flange, which is therefore protected substantially in its entirety from adverse effects of exposure to high temperature.

According to an aspect of the invention, there is provided a gas turbine engine comprising a compressor, a combustor assembly, a turbine and an exhaust system, wherein the exhaust system comprises an exhaust gas casing as defined above.

According to an aspect of the invention, the gas turbine engine comprises a cooling air supply system, coupled to the annular cooling structure and configured to supply a flow of cooling air, wherein the exhaust system comprises a diffuser downstream of the exhaust gas casing and the annular cooling structure discharges into the diffuser.

Air is heated up while passing through the first cooling channel and the second cooling channel and mixed again to the exhaust gas flowing through the diffuser. Thermal energy accumulated in the cooling process is thus made available for further treatment downstream of the gas turbine engine, e.g. in a heat exchanger of a combined cycle power plant. Thus, overall efficiency of the plant is not affected.

According to an aspect of the invention, the compressor comprises an extraction chamber and the cooling air supply system comprises a dedicated piping system coupled to the extraction chamber and to the inlet connectors of the first cooling channel and of the second cooling channel, the dedicated piping system preferably comprising a first dedicated supply pipe coupled to the first cooling channel and a second dedicated supply pipe coupled to the second cooling channel, the first dedicated supply pipe and the second dedicated supply pipe having respective separate extraction points at the extraction chamber and being configured to supply calibrated airflows to the first cooling channel and to the second cooling channel, respectively.

Dedicated piping allows to drive a calibrated airflow toward the annular cooling system. Specifically, calibration of the appropriate amount of cooling air supply may be precise and accurate using a dedicated rather than common piping system, whereby excess extraction of air from the compressor is avoided and efficiency of the gas turbine engine is not significantly affected.

According to an aspect of the invention, the cooling air supply system comprises at least a fan coupled to the inlet connectors of the first cooling channel and of the second cooling channel and configured to supply air from outside to the first cooling channel and to the second cooling channel.

Use of an external fan simplifies the piping system, as the fan or fans may be conveniently placed near the exhaust gas casing as allowed by available space, thus reducing design complexity to avoid intersections with other piping or structures of the gas turbine engine.

According to the present invention, there is also provided a method of retrofitting a heavy-duty gas turbine engine, comprising an exhaust gas casing with a shell delimiting a hot gas path and having a downstream flange for connection to a diffuser, the method comprising applying an annular cooling structure to the shell, the annular cooling structure extending around at least a circumferential portion of the shell adjacent to a downstream flange, wherein applying the annular cooling structure comprises attaching an annular cover structure to the shell, whereby the annular cooling structure is inwardly defined by the shell and is outwardly defined by the cover structure;
wherein the shell comprises a first half-shell and a second half-shell joined to each other at a split plane and applying the annular cooling structure comprises attaching a first carter to the first half-shell, the first carter delimiting a first cooling channel extending around the first half-shell, and attaching a second carter to the first half-shell, the second carter delimiting a second cooling channel extending around the second half-shell;
characterized in that the first carter and the second carter comprise respective cylindrical lateral walls and respective annular front walls, extending radially inwards from the respective lateral walls, and wherein attaching the first carter and the second carter comprises attaching the cylindrical lateral walls of the first carter and of the second carter to a radially outer edge of the downstream flange of the shell and attaching annular front walls of the first carter and of the second carter directly to the shell.

Due to the simple design, the annular cooling structure requires little space and additional components and may be easily applied to existing machines, thereby improving cooling, preventing permanent deformation of the exhaust gas casing, reducing the need for maintenance activity and ultimately extending lifetime.

### BRIEF DESCRIPTION OF THE DRAWINGS

The present invention will now be described with reference to the accompanying drawings, which show a number of non-limitative embodiments thereof, in which:
- figure 1 is a cross-sectional top plan view of a gas turbine engine including an exhaust gas casing in accordance with an embodiment of the present invention;
- figure 2 is a rear view of the exhaust gas casing of figure 2, with parts removed for the sake of clarity;
- figure 3 is a perspective a rear view of the exhaust gas casing of figure 2;
- figure 4 is a top plan view of the exhaust gas casing of figure 2;
- figure 5 is a bottom plan view of the exhaust gas casing of figure 2;
- figure 6 is a side cross-sectional view of a first enlarged detail of the exhaust gas casing of figure 2;
- figure 7 is a side cross-sectional view of a second enlarged detail of the exhaust gas casing of figure 2;
- figure 8 is a perspective front-left view of the gas turbine engine of figure 1, with parts removed for the sake of clarity;
- figure 9 is a perspective front-right view of the gas turbine engine of figure 1, with parts removed for the sake of clarity; and
- figure 10 is a cross-sectional top plan view of a gas turbine engine in accordance with another embodiment of the present invention.

### DETAILED DESCRIPTION OF EXEMPLARY EMBODIMENTS

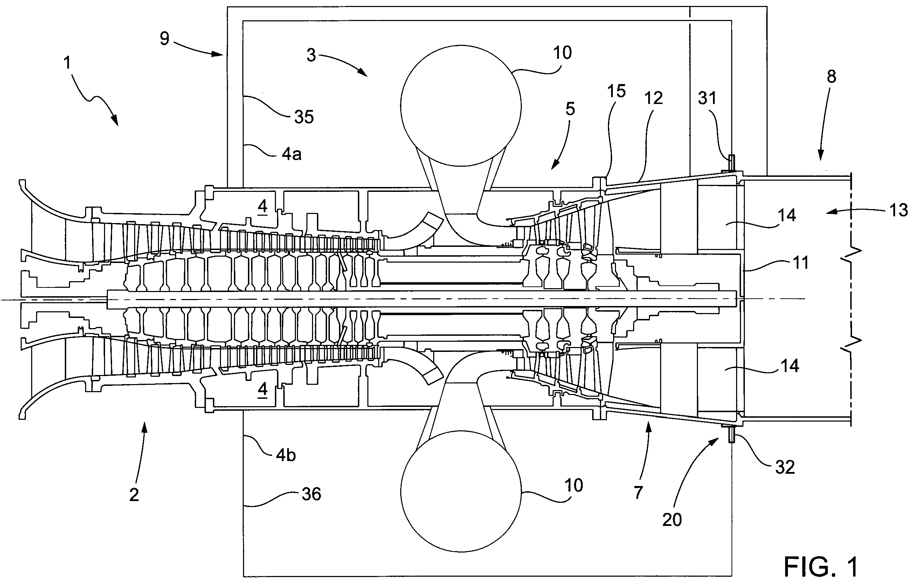

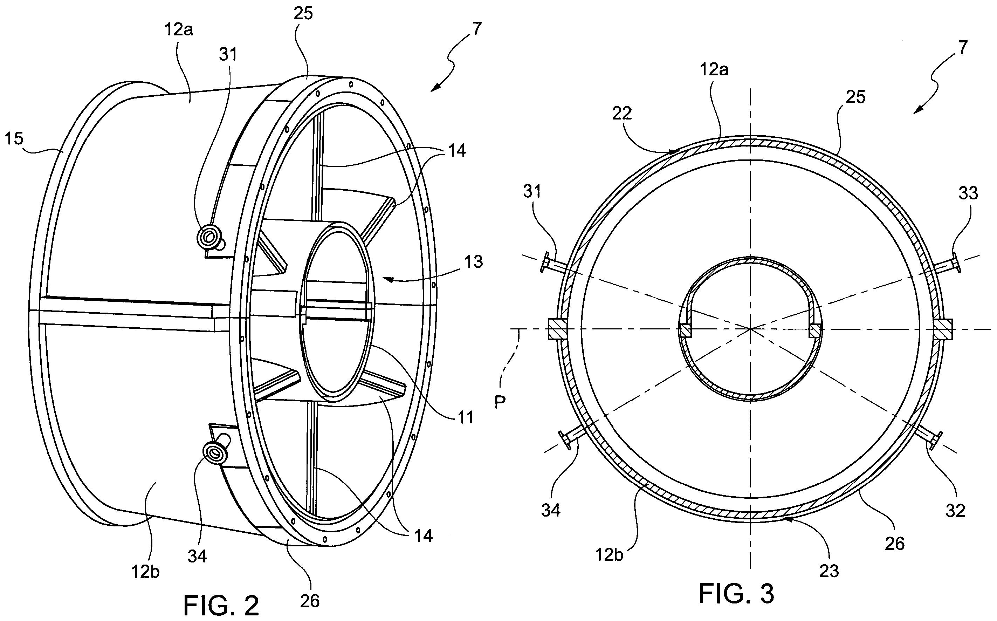

With reference to Figure 1, number 1 defines a gas turbine engine comprising a compressor 2, a combustor assembly 3, a turbine 5, an exhaust gas casing 7 and an axial exhaust diffuser 8, all extending about a longitudinal axis, which is indicated by A in figure 2. In one embodiment (not shown), the diffuser may be a radial diffuser. In addition, the gas turbine engine comprises a cooling air supply system 9, that conveys a flow of relatively fresh air extracted from the compressor 2 to hot parts of the gas turbine engine 1, including the exhaust gas casing 7 and the axial exhaust diffuser 8.

The compressor 2 feeds the first combustor assembly 3 with a flow of compressed air drawn from outside. At least one extraction chamber 4 receives bleed air at an intermediate pressure from an intermediate stage of the compressor 3. Air from the extraction chamber 4 and possibly from additional extraction chambers is fed to hot parts of the combustor assembly 3 and of the gas turbine for the purpose of cooling.

In one embodiment, the combustor assembly 3 comprises two silo combustors 10. However, the combustor assembly could be of a different type, for example an annular or a can or can-annular combustor with single or sequential stages.

The turbine 5 receives and expands a flow of hot gas from the combustor assembly 3 to extract mechanical work, which is transferred to an external user, typically an electric generator, here not shown.

The hot gas is then conveyed through the exhaust gas casing 7 and the exhaust diffuser 8. The exhaust gas casing 7 and the exhaust diffuser 8 extend along the longitudinal axis A immediately downstream of8the turbine 5.

With reference to figures 2-7, the exhaust gas casing 7 comprises an exhaust hub 11 (figures 2 and 3) and a shell 12, that respectively define an inner boundary and an outer boundary of a portion of an exhaust flow path 13. Struts 14 connect the exhaust hub 11 to the shell 12.

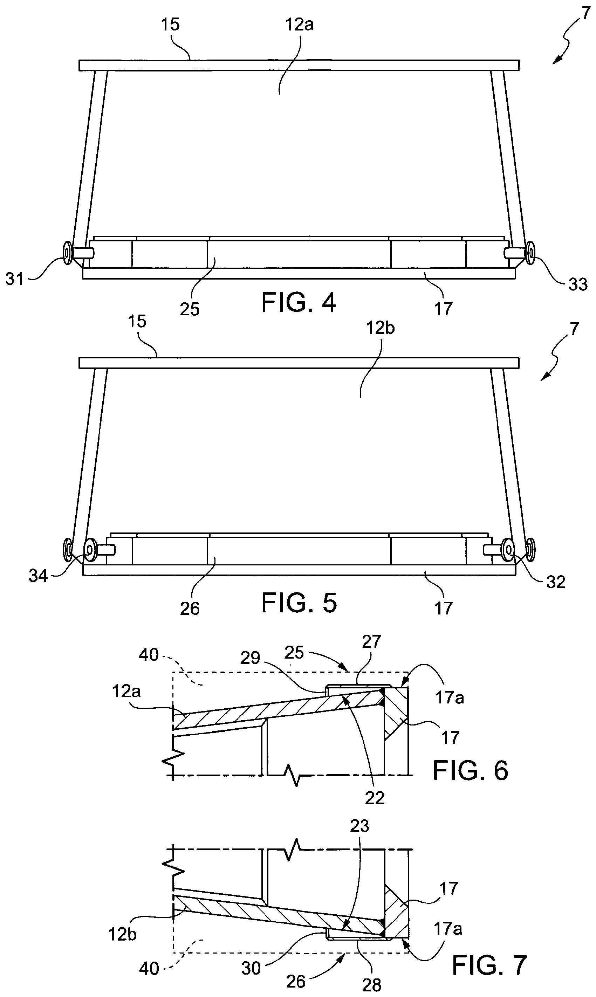

The shell 12 of the exhaust gas casing 7 has frustoconical shape (figures 3 and 4) and is connected to the turbine 5 through an upstream flange 15 and to the diffuser 8 through to a downstream flange 17 (see also figure 6 and 7). Moreover, the shell 12 comprises a first, upper half-shell 12a, and a second, lower half-shell 12b, joined to each other at an horizontal split plane P.

The exhaust gas casing 7 also comprises an annular cooling structure 20, extending around at least a circumferential portion of the shell 12 adjacent to the downstream flange 17. In one embodiment the annular cooling structure 20 in turn comprises a first cooling channel 22, extending around the first half-shell 12a, and a second cooling channel 23, extending around the second half-shell 12b. The first cooling channel 22 is delimited by a first carter 25, attached to the first half-shell 12a, and the second cooling channel 23 is delimited by a second carter 26, attached to the second half-shell 12b. Therefore, the annular cooling structure 20 is inwardly defined by the shell 12 and is outwardly defined by an annular cover structure, which in the embodiment of figures 2-4 is formed by the first carter 25 and by the second carter 26 and is attached to the shell 12.

The first carter 25 and the second carter 26 comprise respective cylindrical lateral walls 27, 28 and respective annular front walls 29, 30 (as illustrated in greater detail in figure 5), that extends radially inwards from the respective lateral walls 27, 28. In one embodiment, the cylindrical lateral walls 27, 28 of the first carter 25 and of the second carter 26 are attached, e.g. welded or brazed, to a radially outer edge 17a of the downstream flange 17 of the shell 12. The front walls 29, 30 are attached, e.g. welded or brazed, directly to the shell 12. Since the shell 12 has frustoconical shape, the first cooling channel 22 and the second cooling channel 23 have triangular cross section.

The first cooling channel 22 and the second cooling channel 23 have respective inlet connectors 31, 32 at respective first circumferential ends and respective outlet connectors 33, 34 at respective second circumferential ends. 8. The first circumferential end of the first cooling channel 22 is adjacent to the second circumferential end of the second cooling channel and the second circumferential end of the first cooling channel is adjacent to the first circumferential end of the second cooling channel. The inlet connectors 31, 32 and the outlet connectors 33, 34 are therefore arranged in such a manner that air flows in the same circumferential direction in the first cooling channel 22 and in the second cooling channel 23, i.e. in both clockwise or in both counterclockwise. Moreover, the inlet connectors 31, 32 and the outlet connectors 33, 34 of the first cooling channel 22 and of the second cooling channel 23 are secured to the shell 12 without bearing on the first carter 25 and the second carter 26.

The cooling air supply system 9 is coupled to the annular cooling structure 20 and is configured to supply a flow of cooling air into the first cooling channel 22 and the second cooling channel 23. Specifically, cooling air is taken from the extraction chamber 4 of the compressor 2 and is supplied to the inlet connectors 31, 32 of the first cooling channel 22 and of the second cooling channel 23 through a dedicated piping system, that includes a first dedicated supply pipe 35 coupled to the first cooling channel 22 and a second dedicated supply pipe 36 coupled to the second cooling channel 23. The first dedicated supply pipe 35 and the second dedicated supply pipe 36 have respective separate extraction points 4a, 4b at the extraction chamber 4 and are designed to supply calibrated airflows to the first cooling channel 22 and to the second cooling channel 23, respectively. Advantageously, the first cooling channel 22 and the second cooling channel 23 are also distinct and separate from other components of the cooling air supply system 9.

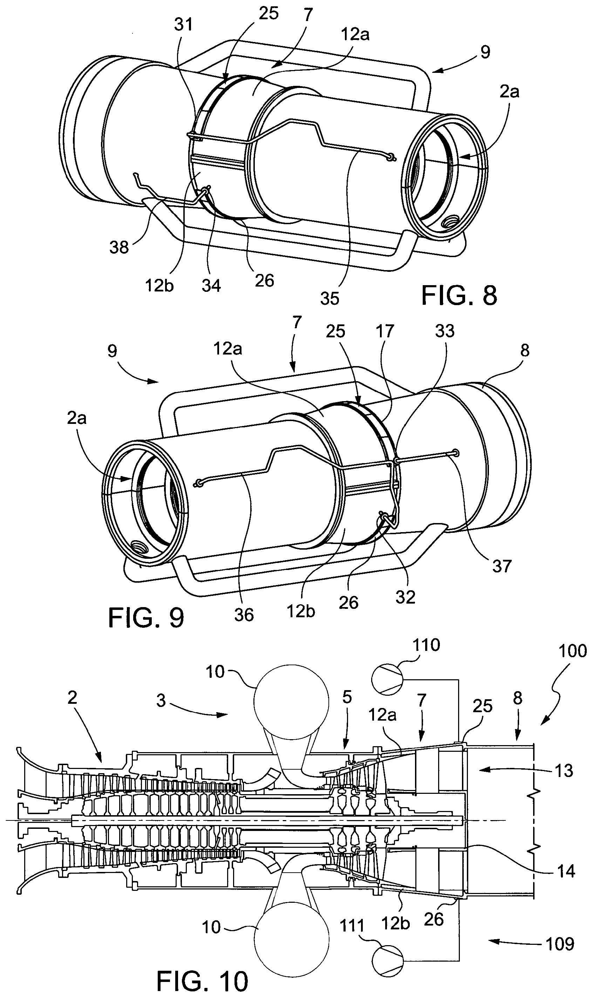

In the embodiment of figures 2-9, the annular cooling structure 20 discharges into the diffuser 8 through the outlet connectors 33, 34 and a first discharge pipe 37 and a second discharge pipe 38 (figures 8 and 9).

According to the embodiment of figure 10, in a gas turbine engine 100, a cooling air supply system 109 comprises fans 110, 111 coupled to the inlet connectors 31, 32 of the first cooling channel 22 and of the second cooling channel 23. The fans 110, 111 and configured to supply air from outside to the first cooling channel 22 and to the second cooling channel 23. In an embodiment not shown, a single fan may be used to supply both the first cooling channel 22 and of the second cooling channel 23.

The exhaust gas casing 7 may be originally provided with the annular cooling structure 20 or, otherwise, the annular cooling structure 20 may be applied to the shell 12 at the downstream flange 17 by retrofitting. In this case, the first carter 25 and the second carter 26 are attached e.g. by welding or brazing to the first half-shell 12a and to the second half-shell 12b, respectively. More precisely, the shell 12 may be enveloped by a layer of thermally insulating material (indicated by 40 in figures 6 and 7), which is initially at least partly removed. Then, the cylindrical lateral walls 27, 28 of the first carter 25 and the second carter 26 are attached to the outer edge 17a of the downstream flange 17 and the annular front walls 29, 30 are directly attached to the first half-shell 12a and to the second half-shell 12b. Once the first carter 25 and the second carter 26 have been attached, the inlet connectors 31, 32 and the outlet connectors 33, 34 are fixed to the shell 12 through the respective ends of the first cooling channel 22 and of the second cooling channel 23. The thermally insulating material 40 is laid again in place and covers the first carter 25 and the second carter 26. This is possible because of the small size of the cooling channels 22, 23 and because the thermally insulating material 40 can be compressed to such an extent to accommodate the cooling channels 22, 23.

Finally, it is clear that modifications and variants can be made to the exhaust gas casing and to the method described herein without departing from the scope of the present invention, as defined in the appended claims.

## Claims

1. An exhaust gas casing for a heavy-duty gas turbine engine, comprising:
a shell (12) delimiting a hot gas path (13) and having a downstream flange (17) for connection to a diffuser (8);
an annular cooling structure (20), extending around at least a circumferential portion of the shell (12) adjacent to the downstream flange (17) and configured to convey cooling air around the shell (12);
wherein the annular cooling structure (20) is inwardly defined by the shell (12) and is outwardly defined by at least an annular cover structure (25, 26) attached to the shell (12);
wherein the shell (12) comprises a first half-shell (12a) and a second half-shell (12b) joined to each other at a split plane (P), and wherein the annular cooling structure (20) comprises a first cooling channel (22), extending around the first half-shell (12a), and a second cooling channel (23), extending around the second half-shell (12b);
wherein the annular cooling structure (20) comprises a first carter (25), attached to the first half-shell (12a) and delimiting the first cooling channel (22), and a second carter (26), attached to the second half-shell (12b) and delimiting the second cooling channel (23);
and wherein the shell (12) has frustoconical shape;
**characterized in that** the first carter (25) and the second carter (26) comprise respective cylindrical lateral walls (27, 28), attached to a radially outer edge (17a) of the downstream flange (17) of the shell (12), and respective annular front walls (29, 30), extending radially inwards from the respective lateral walls (27, 28) and directly attached to the shell (12), whereby the first cooling channel (22) and the second cooling channel (23) have triangular cross section.

2. The exhaust gas casing according to claim 1, wherein the first cooling channel (22) and the second cooling channel (23) have respective inlet connectors (31, 32) at respective first circumferential ends and respective outlet connectors (33, 34) at respective second circumferential ends.

3. The exhaust gas casing according to claim 2, wherein the inlet connectors (31, 32) and the outlet connectors (33, 34) of the first cooling channel (22) and of the second cooling channel (23) are secured to the shell (12) without bearing on the first carter (25) and the second carter (26).

4. The exhaust gas casing according to claim 2 or 3, wherein the first circumferential end of the first cooling channel (22) is adjacent to the second circumferential end of the second cooling channel (23) and the second circumferential end of the first cooling channel (22) is adjacent to the first circumferential end of the second cooling channel (23).

5. A gas turbine engine comprising a compressor (2), a combustor assembly (3), a turbine (5) and an exhaust system (7, 8), wherein the exhaust system (7, 8) comprises an exhaust gas casing (7) according to any one of the preceding claims.

6. The gas turbine engine according to claim 5, comprising a cooling air supply system (9; 109), coupled to the annular cooling structure (20) and configured to supply a flow of cooling air, wherein the exhaust system (7, 8) comprises a diffuser (8) downstream of the exhaust gas casing (7) and the annular cooling structure (20) discharges into the diffuser (8).

7. The gas turbine engine according to claim 6, wherein the compressor (2) comprises an extraction chamber (4) and the cooling air supply system (9) comprises a dedicated piping system (35, 36) coupled to the extraction chamber (4) and to the inlet connectors (31, 32) of the first cooling channel (22) and of the second cooling channel (23), the dedicated piping system (35, 36) preferably comprising a first dedicated supply pipe (35) coupled to the first cooling channel (22) and a second dedicated supply pipe (36) coupled to the second cooling channel (23), the first dedicated supply pipe (35) and the second dedicated supply pipe (36) having respective separate extraction points (4a, 4b) at the extraction chamber (4) and being configured to supply calibrated airflows to the first cooling channel (22) and to the second cooling channel (23), respectively.

8. The gas turbine engine according to claim 7, wherein the cooling air supply system (109) comprises at least a fan (110, 11) coupled to the inlet connectors (31, 32) of the first cooling channel (22) and of the second cooling channel (23) and configured to supply air from outside to the first cooling channel (22) and to the second cooling channel (23).

9. A method of retrofitting a heavy-duty gas turbine engine (1; 100), the gas turbine engine (1; 100) comprising an exhaust gas casing (7) with a shell (12) delimiting a hot gas path (13) and having a downstream flange (17) for connection to a diffuser (8), the method comprising applying an annular cooling structure (20) to the shell (12), the annular cooling structure (20) extending around at least a circumferential portion of the shell (12) adjacent to a downstream flange (17), wherein applying the annular cooling structure (20) comprises attaching an annular cover structure (25, 26) to the shell (12), whereby the annular cooling structure (20) is inwardly defined by the shell (12) and is outwardly defined by the cover structure;
wherein the shell (12) comprises a first half-shell (12a) and a second half-shell (12b) joined to each other at a split plane (P) and wherein applying the annular cooling structure (20) comprises attaching a first carter (25) to the first half-shell (12a), the first carter (25) delimiting a first cooling channel (22) extending around the first half-shell (12a), and attaching a second carter (26) to the first half-shell (12a), the second carter (26) delimiting a second cooling channel (23) extending around the second half-shell (12b);
wherein the first carter (25) and the second carter (26) comprise respective cylindrical lateral walls (27, 28) and respective annular front walls (29, 30), extending radially inwards from the respective lateral walls (27, 28);
**characterized in that** attaching the first carter (25) and the second carter (26) comprises attaching the cylindrical lateral walls (27, 28) of the first carter (25) and of the second carter (26) to a radially outer edge (17a) of the downstream flange (17) of the shell (12) and attaching annular front walls (29, 30) of the first carter (25) and of the second carter (26) directly to the shell (12).

## Patentansprüche

1. Abgasgehäuse für einen Hochleistungsgasturbinenmotor, umfassend:
einen Mantel (12), der einen Heißgaspfad (13) begrenzt und einen stromabwärtigen Flansch (17) zum Verbinden mit einem Diffusor (8) aufweist;
eine ringförmige Kühlungsstruktur (20), die sich um mindestens einen umlaufenden Abschnitt des Mantels (12) herum benachbart zu dem stromabwärtigen Flansch (17) erstreckt und dazu ausgestaltet ist, Kühlungsluft um den Mantel (12) herum zu befördern;
wobei die ringförmige Kühlungsstruktur (20) nach innen von dem Mantel (12) definiert ist und nach außen von mindestens einer ringförmigen Abdeckungsstruktur (25, 26) definiert ist, die an dem Mantel (12) befestigt ist;
wobei der Mantel (12) einen ersten Halbmantel (12a) und einen zweiten Halbmantel (12b) umfasst, die an einer Trennebene (P) miteinander verbunden sind, und wobei die ringförmige Kühlungsstruktur (20) einen ersten Kühlungskanal (22), der sich um den ersten Halbmantel (12a) herum erstreckt, und einen zweiten Kühlungsanal (23) umfasst, der sich um den zweiten Halbmantel (12b) herum erstreckt;
wobei die ringförmige Kühlungsstruktur (20) eine erste Schale (25), die an dem ersten Halbmantel (12a) befestigt ist und den ersten Kühlungskanal (22) begrenzt, und eine zweite Schale (26) umfasst, die an dem zweiten Halbmantel (12b) befestigt ist und den zweiten Kühlungskanal (23) begrenzt;
und wobei der Mantel (12) eine Kegelstumpfform aufweist;
**dadurch gekennzeichnet, dass** die erste Schale (25) und die zweite Schale (26) jeweilige zylindrische Seitenwände (27, 28), die an einem radial äußeren Rand (17a) des stromabwärtigen Flansches (17) des Mantels (12) befestigt sind, und jeweilige ringförmige Vorderwände (29, 30) umfassen, die sich von den jeweiligen Seitenwänden (27, 28) radial nach innen erstrecken und direkt an dem Mantel (12) befestigt sind, wodurch der erste Kühlungskanal (22) und der zweite Kühlungsanal (23) einen dreieckigen Querschnitt aufweisen.

2. Abgasgehäuse nach Anspruch 1, wobei der erste Kühlungskanal (22) und der zweite Kühlungskanal (23) jeweilige Einlassverbinder (31, 32) an jeweiligen ersten umlaufenden Enden und jeweilige Auslassverbinder (33, 34) an jeweiligen zweiten umlaufenden Enden aufweisen.

3. Abgasgehäuse nach Anspruch 2, wobei die Einlassverbinder (31, 32) und die Auslassverbinder (33, 34) des ersten Kühlungskanals (22) und des zweiten Kühlungskanals (23) an dem Mantel (12) gesichert sind, ohne auf der ersten Schale (25) und der zweiten Schale (26) aufzuliegen.

4. Abgasgehäuse nach Anspruch 2 oder 3, wobei das erste umlaufende Ende des ersten Kühlungskanals (22) benachbart zu dem zweiten umlaufenden Ende des zweiten Kühlungskanals (23) liegt und das zweite umlaufende Ende des ersten Kühlungskanals (22) benachbart zu dem ersten umlaufenden Ende des zweiten Kühlungskanals (23) liegt.

5. Gasturbinenmotor, der einen Verdichter (2), eine Brenneranordnung (3), eine Turbine (5) und ein Abgassystem (7, 8) umfasst, wobei das Abgassystem (7, 8) ein Abgasgehäuse (7) nach einem der vorhergehenden Ansprüche umfasst.

6. Gasturbinenmotor nach Anspruch 5, umfassend ein Kühlungsluft-Zufuhrsystem (9; 109), das an die ringförmige Kühlungsstruktur (20) gekoppelt ist und dazu ausgestaltet ist, eine Strömung von Kühlungsluft zuzuführen, wobei das Abgassystem (7, 8) einen Diffusor (8) stromabwärts des Abgasgehäuses (7) umfasst und die ringförmige Kühlungsstruktur (20) in den Diffusor (8) mündet.

7. Gasturbinenmotor nach Anspruch 6, wobei der Verdichter (2) eine Entnahmekammer (4) umfasst und das Kühlungsluft-Zufuhrsystem (9) ein dediziertes Rohrleitungssystem (35, 36) umfasst, das an die Entnahmekammer (4) und an die Einlassverbinder (31, 32) des ersten Kühlungskanals (22) und des zweiten Kühlungskanals (23) gekoppelt ist, wobei das dedizierte Rohrleitungssystem (35, 36) vorzugsweise ein erstes dediziertes Zufuhrrohr (35), das an den ersten Kühlungskanal (22) gekoppelt ist, und ein zweites dediziertes Zufuhrrohr (36) umfasst, das an den zweiten Kühlungskanal (23) gekoppelt ist, wobei das erste dedizierte Zufuhrrohr (35) und das zweite dedizierte Zufuhrrohr (36) jeweilige getrennte Entnahmepunkte (4a, 4b) an der Entnahmekammer (4) aufweisen und dazu ausgestaltet sind, kalibrierte Luftströmungen zum ersten Kühlungskanal (22) beziehungsweise zum zweiten Kühlungskanal (23) zuzuführen.

8. Gasturbinenmotor nach Anspruch 7, wobei das Kühlungsluft-Zufuhrsystem (109) mindestens einen Lüfter (110, 11) umfasst, der an die Einlassverbinder (31, 32) des ersten Kühlungskanals (22) und des zweiten Kühlungskanals (23) gekoppelt ist und dazu ausgestaltet ist, Luft von außen zu dem ersten Kühlungskanal (22) und zu dem zweiten Kühlungskanal (23) zuzuführen.

9. Verfahren zum Nachrüsten eines Hochleistungsgasturbinenmotors (1; 100), wobei der Gasturbinenmotor (1; 100) ein Abgasgehäuse (7) mit einem Mantel (12) umfasst, der einen Heißgaspfad (13) begrenzt und einen stromabwärtigen Flansch (17) zur Verbindung mit einem Diffusor (8) aufweist, wobei das Verfahren das Anbringen einer ringförmigen Kühlungsstruktur (20) an dem Mantel (12) umfasst, wobei die ringförmige Kühlungsstruktur (20) sich um mindestens einen umlaufenden Abschnitt des Mantels (12) benachbart zu einem stromabwärtigen Flansch (17) erstreckt, wobei das Anbringen der ringförmigen Kühlungsstruktur (20) das Befestigen einer ringförmigen Abdeckungsstruktur (25, 26) an dem Mantel (12) umfasst, wodurch die ringförmige Kühlungsstruktur (20) nach innen von dem Mantel (12) definiert ist und nach außen von der Abdeckungsstruktur definiert ist;
wobei der Mantel (12) einen ersten Halbmantel (12a) und einen zweiten Halbmantel (12b) umfasst, die an einer Trennebene (P) miteinander verbunden sind, und wobei das Anbringen der ringförmigen Kühlungsstruktur (20) das Befestigen einer ersten Schale (25) an dem ersten Halbmantel (12a), wobei die erste Schale (25) einen ersten Kühlungskanal (22) begrenzt, der sich um den ersten Halbmantel (12a) herum erstreckt, und das Befestigen einer zweiten Schale (26) an dem ersten Halbmantel (12a) umfasst, wobei die zweite Schale (26) einen zweiten Kühlungskanal (23) begrenzt, der sich um den zweiten Halbmantel (12b) herum erstreckt;
wobei die erste Schale (25) und die zweite Schale (26) jeweilige zylindrische Seitenwände (27, 28) und jeweilige ringförmige Vorderwände (29, 30) umfassen, die sich von den jeweiligen Seitenwänden (27, 28) radial nach innen erstrecken;
**dadurch gekennzeichnet, dass** das Befestigen der ersten Schale (25) und der zweiten Schale (26) das Befestigen der zylindrischen Seitenwände (27, 28) der ersten Schale (25) und der zweiten Schale (26) an einem radial äußeren Rand (17a) des stromabwärtigen Flansches (17) des Mantels (12) und das Befestigen ringförmiger Vorderwände (29, 30) der ersten Schale (25) und der zweiten Schale (26) direkt an dem Mantel (12) umfasst.

## Revendications

1. Boîtier de gaz d'échappement pour moteur à turbine à gaz de grande puissance, comprenant:
une coque (12) délimitant un trajet de gaz chauds (13) et ayant une bride aval (17) pour la liaison à un diffuseur (8);
une structure de refroidissement annulaire (20), s'étendant autour d'au moins une partie circonférentielle de la coque (12) adjacente à la bride aval (17) et configurée pour acheminer de l'air de refroidissement autour de la coque (12);
dans lequel la structure de refroidissement annulaire (20) est définie intérieurement par la coque (12) et est définie extérieurement par au moins une structure de revêtement annulaire (25, 26) fixée à la coque (12);
dans lequel la coque (12) comprend une première demi-coque (12a) et une deuxième demi-coque (12b) jointes l'une à l'autre au niveau d'un plan de séparation (P), et dans lequel la structure de refroidissement annulaire (20) comprend un premier canal de refroidissement (22), s'étendant autour de la première demi-coque (12a), et un deuxième canal de refroidissement (23), s'étendant autour de la deuxième demi-coque (12b);
dans lequel la structure de refroidissement annulaire (20) comprend un premier carter (25), fixé à la première demi-coque (12a) et délimitant le premier canal de refroidissement (22), et un deuxième carter (26), fixé à la deuxième demi-coque (12b) et délimitant le deuxième canal de refroidissement (23);
et dans lequel la coque (12) a une forme tronconique;
**caractérisé en ce que** le premier carter (25) et le deuxième carter (26) comprennent des parois latérales cylindriques respectives (27, 28), fixées à un bord radialement extérieur (17a) de la bride aval (17) de la coque (12), et des parois frontales annulaires respectives (29, 30), s'étendant radialement vers l'intérieur depuis les parois latérales respectives (27, 28) et directement fixées à la coque (12), de sorte que le premier canal de refroidissement (22) et le deuxième canal de refroidissement (23) ont une section transversale triangulaire.

2. Boîtier de gaz d'échappement selon la revendication 1, dans lequel le premier canal de refroidissement (22) et le deuxième canal de refroidissement (23) ont des raccords d'entrée respectifs (31, 32) à des premières extrémités circonférentielles respectives et des raccords de sortie respectifs (33, 34) à des deuxièmes extrémités circonférentielles respectives.

3. Boîtier de gaz d'échappement selon la revendication 2, dans lequel les raccords d'entrée (31, 32) et les raccords de sortie (33, 34) du premier canal de refroidissement (22) et du deuxième canal de refroidissement (23) sont fixés à la coque (12) sans appuyer sur le premier carter (25) et le deuxième carter (26).

4. Boîtier de gaz d'échappement selon la revendication 2 ou 3, dans lequel la première extrémité circonférentielle du premier canal de refroidissement (22) est adjacente à la deuxième extrémité circonférentielle du deuxième canal de refroidissement (23) et la deuxième extrémité circonférentielle du premier canal de refroidissement (22) est adjacente à la première extrémité circonférentielle du deuxième canal de refroidissement (23).

5. Moteur à turbine à gaz comprenant un compresseur (2), une chambre de combustion (3), une turbine (5) et un système d'échappement (7, 8), dans lequel le système d'échappement (7, 8) comprend un boîtier de gaz d'échappement (7) selon l'une quelconque des revendications précédentes.

6. Moteur à turbine à gaz selon la revendication 5, comprenant un système de fourniture d'air de refroidissement (9; 109), couplé à la structure de refroidissement annulaire (20) et configuré pour fournir un flux d'air de refroidissement, dans lequel le système d'échappement (7, 8) comprend un diffuseur (8) en aval du boîtier de gaz d'échappement (7) et la structure de refroidissement annulaire (20) évacue dans le diffuseur (8).

7. Moteur à turbine à gaz selon la revendication 6, dans lequel le compresseur (2) comprend une chambre d'extraction (4) et le système de fourniture d'air de refroidissement (9) comprend un système de tuyauterie dédié (35, 36) couplé à la chambre d'extraction (4) et aux raccords d'entrée (31, 32) du premier canal de refroidissement (22) et du deuxième canal de refroidissement (23), le système de tuyauterie dédié (35, 36) comprenant de préférence un premier tuyau de fourniture dédié (35) couplé au premier canal de refroidissement (22) et un deuxième tuyau de fourniture dédié (36) couplé au deuxième canal de refroidissement (23), le premier tuyau de fourniture dédié (35) et le deuxième tuyau de fourniture dédié (36) ayant des points d'extraction séparés respectifs (4a, 4b) au niveau de la chambre d'extraction (4) et étant configurés pour fournir des flux d'air calibrés au premier canal de refroidissement (22) et au deuxième canal de refroidissement (23), respectivement.

8. Moteur à turbine à gaz selon la revendication 7, dans lequel le système de fourniture d'air de refroidissement (109) comprend au moins un ventilateur (110, 11) couplé aux raccords d'entrée (31, 32) du premier canal de refroidissement (22) et du deuxième canal de refroidissement (23) et configuré pour fournir de l'air de l'extérieur au premier canal de refroidissement (22) et au deuxième canal de refroidissement (23).

9. Procédé de modernisation d'un moteur à turbine à gaz (1; 100) de grande puissance, le moteur à turbine à gaz (1; 100) comprenant un boîtier de gaz d'échappement (7) avec une coque (12) délimitant un trajet de gaz chauds (13) et ayant une bride aval (17) pour la liaison à un diffuseur (8), le procédé comprenant l'application d'une structure de refroidissement annulaire (20) sur la coque (12), la structure de refroidissement annulaire (20) s'étendant autour d'au moins une partie circonférentielle de la coque (12) adjacente à une bride aval (17), dans lequel l'application de la structure de refroidissement annulaire (20) comprend la fixation d'une structure de revêtement annulaire (25, 26) sur la coque (12), de sorte que la structure de refroidissement annulaire (20) est définie intérieurement par la coque (12) et est définie extérieurement par la structure de revêtement;
dans lequel la coque (12) comprend une première demi-coque (12a) et une deuxième demi-coque (12b) jointes l'une à l'autre au niveau d'un plan de séparation (P) et dans lequel l'application de la structure de refroidissement annulaire (20) comprend la fixation d'un premier carter (25) à la première demi-coque (12a), le premier carter (25) délimitant un premier canal de refroidissement (22) s'étendant autour de la première demi-coque (12a), et la fixation d'un deuxième carter (26) à la première demi-coque (12a), le deuxième carter (26) délimitant un deuxième canal de refroidissement (23) s'étendant autour de la deuxième demi-coque (12b);
dans lequel le premier carter (25) et le deuxième carter (26) comprennent des parois latérales cylindriques respectives (27, 28) et des parois frontales annulaires respectives (29, 30), s'étendant radialement vers l'intérieur à partir des parois latérales respectives (27, 28);
**caractérisé en ce que** la fixation du premier carter (25) et du deuxième carter (26) comprend la fixation des parois latérales cylindriques (27, 28) du premier carter (25) et du deuxième carter (26) à un bord radialement extérieur (17a) de la bride aval (17) de la coque (12) et la fixation de parois frontales annulaires (29, 30) du premier carter (25) et du deuxième carter (26) directement à la coque (12).
